(19) Europäisches Patentamt / European Patent Office / Office européen des brevets

(11) EP 3 904 411 B1

(12) **EUROPEAN PATENT SPECIFICATION**

(45) Date of publication and mention of the grant of the patent:
**31.01.2024 Bulletin 2024/05**

(21) Application number: **19905454.5**

(22) Date of filing: **04.12.2019**

(51) International Patent Classification (IPC):
***C08F 265/06*** (2006.01) ***C08F 2/44*** (2006.01)
***C08F 2/50*** (2006.01) ***G09F 9/00*** (2006.01)
***C09J 4/06*** (2006.01)

(52) Cooperative Patent Classification (CPC):
(C-Sets available)
**C09J 151/003; C08F 2/50; C08F 265/06; C09J 4/06**

(Cont.)

(86) International application number:
**PCT/JP2019/047447**

(87) International publication number:
**WO 2020/137401 (02.07.2020 Gazette 2020/27)**

(54) **PHOTOCURABLE RESIN COMPOSITION AND METHOD FOR PRODUCING IMAGE DISPLAY DEVICE**

LICHTHÄRTBARE HARZZUSAMMENSETZUNG UND VERFAHREN ZUR HERSTELLUNG EINER BILDANZEIGEVORRICHTUNG

COMPOSITION DE RÉSINE PHOTODURCISSABLE ET PROCÉDÉ DE FABRICATION D’UN APPAREIL D’AFFICHAGE D’IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2018 JP 2018242140**

(43) Date of publication of application:
**03.11.2021 Bulletin 2021/44**

(73) Proprietor: **Dexerials Corporation**
**Shimotsuke-shi, Tochigi 323-0194 (JP)**

(72) Inventors:
- **IWATA, Mizuki**
  **Tokyo 141-0032 (JP)**
- **ENDO, Yasumi**
  **Tokyo 141-0032 (JP)**
- **NAKAMURA, Tsukasa**
  **Tokyo 141-0032 (JP)**

(74) Representative: **Müller-Boré & Partner Patentanwälte PartG mbB**
**Friedenheimer Brücke 21**
**80639 München (DE)**

(56) References cited:
**WO-A1-2015/046422**
**WO-A1-2017/203783**
**JP-A- 2015 004 038**
**JP-A- 2015 134 847**
**JP-A- 2016 011 416**
**JP-A- 2016 065 183**
**JP-A- 2017 210 578**
**JP-A- 2018 062 590**
**JP-A- 2019 108 426**
**US-A1- 2014 329 927**
**US-A1- 2016 091 791**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 265/06, C08F 220/1818, C08F 220/20, C08F 222/103;**
**C09J 4/06, C08F 265/06**

## Description

### Technical Field

The present invention relates to a photocurable resin composition that can provide a photocured product excellent in light transmission and adhesion and is also preferably applicable to an inkjet coating method.

### Background Art

Liquid crystal display devices, organic EL display devices, and the like are widely known as image display devices composed of a light-transmitting cover member such as a transparent cover material and an image display member such as a liquid crystal display panel. The aforementioned members are laminated via a photocured resin layer. Conventionally, such a display device is produced by applying a photocurable resin composition on the surface of either one of a flat image display member or a flat light-transmitting cover member, by die coating, screen coating, or other coating methods, thereby forming a photocurable resin composition layer; irradiating the photocurable resin composition layer with ultraviolet rays to pre-cure the film, thereby forming a pre-cured resin layer; laminating the other member on the pre-cured resin layer; and irradiating the pre-cured resin layer with ultraviolet rays from the light-transmitting cover member side, thereby completely curing the pre-cured resin layer.

In recent years, curved image display devices have been commercialized. Thus the application of the photocurable resin composition to image display members or light-transmitting cover members that are curved in, for example, a gutter shape or a bowl shape have been performed. In this case, the photocurable resin composition has to be relatively thickly applied to the center area of the image display member or the light-transmitting cover member, and to be gradually thinly toward the outer edges thereof. Thus, instead of the conventional die coating method or screen coating method, an inkjet coating method, which allows a person to easily control the amount of ink to be applied depending on each micro area, is proposed for applying the photocurable resin composition to the image display member or the light-transmitting cover member (Patent Literature 1).

In Patent Literature 1, for applying the inkjet coating method to the production of an image display device, an acrylic photocurable resin composition is used as the photocurable resin composition. The acrylic photocurable resin composition includes a (meth)acrylate oligomer with a molecular weight of 5000 or more in addition to a (meth)acrylate monomer. It further includes a photo-radical polymerization initiator or a thermo-radical polymerization initiator, and the composition has a viscosity adjusted to 150 mPa·s or less, specifically 27 to 141 mPa·s (25°C) (see Examples).

### Citation List

#### Patent Literature

Patent Literature 1: Japanese Patent Application Laid-Open No. 2017-210578

### Summary of Invention

#### Technical Problem

However, the photocurable resin composition used in Patent Literature 1 includes a (meth)acrylate oligomer having a (meth)acryloyl group together with the (meth)acrylate monomer, and therefore, is susceptible to oxygen inhibition and cannot exhibit a strong tackiness easily. In addition to this problem, in some cases, this composition was not successfully ejected smoothly from an inkjet nozzle even when the viscosity thereof was within a predetermined range.

The present invention is intended to solve such conventional problems. It is an object of the present invention to provide a photocurable resin composition that has no problems caused by use of a (meth)acrylate oligomer having a (meth)acryloyl group and can be ejected smoothly by an inkjet coating method. The photocurable resin composition is applied by the inkjet coating method in producing an image display device composed of an image display member and a light-transmitting cover member, both of which are laminated via a light-transmitting photocured resin layer formed from the photocurable resin composition.

#### Solution to Problem

The present inventors have found that the above-mentioned object can be achieved as described below, and have completed the present invention. Herein, instead of a (meth)acrylate oligomer having a (meth)acryloyl group, the present inventors used, as a macromolecular substance to be used with a (meth)acrylate monomer constituting the photocurable resin composition, a (meth)acrylate polymer with a hydroxyl value not less than a predetermined value and having no (meth)acryloyl group. In addition, the present inventors used a hydrogen abstraction-type photopolymerization initiator as a photopolymerization initiator. Furthermore, they adjusted the viscosity of the photocurable resin composition to 10 mPa·s or more at 25°C and 30 mPa·s or less at 60°C.

Specifically, the present invention provides a photocurable resin composition that can be used for an image display device composed of an image display member and a light-transmitting cover member that are laminated via a light-transmitting photocured resin layer formed from the photocurable resin composition, wherein the photocurable resin composition includes the following components (A) to (D):

<Component (A)>
a (meth)acrylate polymer with a hydroxyl value of 120 mgKOH/g or more and having no (meth)acryloyl group;
<Component (B)>
a hydroxyl group-containing monofunctional (meth)acrylate monomer;
<Component (C)>
a hydroxyl group-free monofunctional (meth)acrylate monomer; and
<Component (D)>

a hydrogen abstraction-type photopolymerization initiator,
and has a viscosity of 10 mPa·s or more at 25°C and 30 mPa·s or less at 60°C.

The present invention also provides a method for producing an image display device composed of an image display member and a light-transmitting cover member that are laminated via a light-transmitting photocured resin layer formed from a photocurable resin composition, the method including the following steps (a) to (c):

<Step (a)>
the step of ejecting the above-mentioned photocurable resin composition of the present invention from a nozzle of an inkjet coating device onto a surface of either one of the image display member or the light-transmitting cover member, thereby forming a photocurable resin composition layer;
<Step (b)>
the step of laminating the other member on the photocurable resin composition layer, thereby bonding the image display member and the light-transmitting cover member together; and
<Step (c)>
the step of curing the photocurable resin composition layer sandwiched between both members by irradiating the film with ultraviolet rays, thereby obtaining an image display device composed of the image display member and the light-transmitting cover member that are laminated via a photocured resin layer.

The present invention also provides a method for producing an image display device composed of an image display member and a light-transmitting cover member that are laminated via a light-transmitting photocured resin layer formed from a photocurable resin composition, the method including the following steps(aa) to (dd):

<Step (aa)>
the step of ejecting the photocurable resin composition of the present invention from a nozzle of an inkjet coating device onto a surface of either one of the image display member or the light-transmitting cover member, thereby forming a photocurable resin composition layer;
<Step (bb)>
the step of irradiating the photocurable resin composition layer with ultraviolet rays, thereby forming a pre-cured resin layer;
<Step(cc)>
the step of laminating the other member on the pre-cured resin layer, thereby bonding the image display member and the light-transmitting cover member together; and
<Step(dd)>
the step of completely curing the pre-cured resin layer sandwiched between both members by irradiating the layer with ultraviolet rays, thereby obtaining an image display device composed of the image display member and the light-transmitting cover member that are laminated via a photocured resin layer.

Advantageous Effects of Invention

The photocurable resin composition of the present invention can be used for image display devices composed of an image display member and a light-transmitting cover member that are laminated via a light-transmitting photocured resin layer formed from the photocurable resin composition. The photocurable resin composition includes, as a component to be used with the (meth)acrylate monomer serving as a main polymerization component, not the oligomer having a (meth)acryloyl group that may polymerize with the monomer but the (meth)acrylate polymer with a hydroxyl value of 120 mgKOH/g or more and having no (meth)acryloyl group. Furthermore, the photocurable resin composition includes the hydrogen abstraction-type photopolymerization initiator as a photopolymerization initiator. Such a (meth)acrylate polymer does not contribute to photopolymerization involving a (meth)acryloyl group. However, this polymer generates a radical when the hydrogen abstraction-type photopolymerization initiator abstracts a hydrogen thereof, and consequently, is incorporated into a polymer chain formed from (meth)acrylate monomers as a side chain or a polymer-crosslinking chain, and can impart good plasticity, film-forming properties, and adhesive properties to the photocurable resin composition.

Furthermore, the photocurable resin composition of the present invention has a viscosity of 10 mPa·s or more at 25°C and 30 mPa·s or less at 60°C, and thus, can exhibit a good suitability for inkjet coating under a wide range of temperature conditions for inkjet coating including temperatures of 25°C and 60°C.

Brief Description of Drawings

FIG. 1 is a view for describing a step (a) of a method for producing an image display device according to the present invention.

FIG. 2 is a view for describing the step (a) of the method for producing an image display device according to the present invention.

FIG. 3 is a view for describing a step (b) of the method for producing an image display device according to the present invention.

FIG. 4 is a view for describing the step (b) of the method for producing an image display device according to the present invention.

FIG. 5 is a view for describing a step (c) of the method for producing an image display device according to the present invention.

FIG. 6 is a view for describing a step (aa) of the method for producing an image display device according to the present invention.

FIG. 7 is a view for describing the step (aa) of the method for producing an image display device according to the present invention.

FIG. 8 is a view for describing a step (bb) of the method for producing an image display device according to the present invention.

FIG. 9 is a view for describing the step (bb) of the method for producing an image display device according to the present invention.

FIG. 10 is a view for describing a step (cc) of the method for producing an image display device according to the present invention.

FIG. 11 is a view for describing a step (dd) of the method for producing an image display device according to the present invention.

FIG. 12 is a view for describing the step (dd) of the method for producing an image display device according to the present invention.

Description of Embodiments

Hereinafter, a photocurable resin composition of the present invention will be described first, and then, a method for producing an image display device by using the photocurable resin composition will be described.

<Photocurable resin composition>

The photocurable resin composition of the present invention is a photocurable resin composition that may be preferably used for an image display device composed of an image display member and a light-transmitting cover member that are laminated via a light-transmitting photocured resin layer formed from the photocurable resin composition, wherein the photocurable resin composition includes the belowmentioned component (A), component (B), component (C), and component (D), and has a viscosity of 10 mPa·s or more at 25°C and 30 mPa·s or less at 60°C.

An image display device for which the photocurable resin composition of the present invention is preferably used and an image display member and a light-transmitting cover member that constitute the image display device will be described in the section describing the method for producing an image display device of the present invention.

<Component (A)>

The photocurable resin composition of the present invention includes a (meth)acrylate polymer with a hydroxyl value of 120 mgKOH/g or more, and preferably 170 mgKOH/g or more and having no (meth)acryloyl group, so that the composition imparts plasticity to a cured product and ensures good film-forming properties (retention of the filmy state) and good adhesive properties. Having a hydroxyl value means having a hydroxyl group within a molecule. The presence of the hydroxyl group enables the molecule to bind to a side chain of a polymer chain, in collaboration with the component (D) described below, which is a hydrogen abstraction-type photopolymerization initiator. As used herein, the term "(meth)acrylate" encompasses acrylates and methacrylates.

As used in relation to the (meth)acrylate polymer of the component (A), the term "hydroxyl value" refers to the mass (in mg) of KOH required to neutralize the acetic acid generated by acetylating the hydroxyl group in one gram of the polymer and then hydrolyzing the acetyl group. Thus, a higher hydroxyl value means a larger number of hydroxyl groups. The hydroxyl value of the (meth)acrylate polymer of the component (A) was set at 120 mgKOH/g or more because when the hydroxyl value is less than 120 mgKOH/g, the cured product of the photocurable resin composition tends to have a low crosslink density and, especially at high temperatures, have a significant reduction in the elastic modulus thereof. Simply increasing only the crosslink density of the cured product could be achieved by using the component (E) described below, a polyfunctional (meth)acrylate monomer, in large quantities. However, this raises concern that the cured product of the photocurable resin composition may become brittle. As a solution to this, crosslinking by using a polymer with a reasonably high molecular weight allows for imparting a good flexibility and cohesive force to the cured product. An excessively high hydroxyl value tends to cause an excessively high crosslink density of the cured product of the photocurable resin composition, resulting in loss of flexibility. Thus, the hydroxyl value is set at 400 mgKOH/g or less, and preferably 350 mgKOH/g or less.

A (meth)acrylate polymer having a (meth)acryloyl group is more likely to be excessively incorporated into the main chain of the polymer chain composed of the (meth)acrylate monomers of the component (B) and the component (C). To prevent this, the (meth)acrylate polymer having no (meth)acryloyl group is used as the (meth)acrylate polymer of the component (A).

If the weight-average molecular weight Mw of the (meth)acrylate polymer of the component (A) is too small, molecules in which no hydroxyl group is introduced tend to increase and a risk such as bleeding tends to increase. Thus, the weight-average molecular weight Mw is preferably 5000 or more, and more preferably 100000 or more. If the weight-average molecular weight Mw is too large, an ejection failure due to an increase in viscosity tends to occur. Thus, the weight-average molecular weight Mw is preferably 500000 or less, and more preferably 300000 or less. In this specification, the weight-average molecular weight Mw and the number-average molecular weight Mn of the polymer may be measured by gel permeation chromatography (GPC) (in terms of standard polystyrene molecular weight).

Further, if the degree of dispersion (Mw/Mn) of the (meth)acrylate polymer of the component (A) is too low, the polymer and the unreacted monomers tend to be easily separated from each other, and therefore, it is preferably 3 or more. If the degree of dispersion is too high, a polymer component is mixed which has a relatively low molecular weight and is not desired. Thus, the degree of dispersion is preferably 10 or less.

Preferable examples of the (meth)acrylate polymer of the component (A) may include copolymers of a hydroxyl group-containing (meth)acrylate monomer and a hydroxyl group-free (meth)acrylate monomer. The (meth)acrylate polymer is preferably liquid at normal temperature. Although the homopolymer of a hydroxyl group-containing (meth)acrylate monomer can be exemplified, there is a concern that the polarity of the polymer becomes too high and the polymer tends to become a high viscosity liquid or a solid at normal temperature as well as compatibility with other components decreases.

The hydroxyl group-containing (meth)acrylate monomer which is a monomer unit constituting the (meth)acrylate polymer of the component (A) is a (meth)acrylate having one or more hydroxyl groups in its molecule. Specific examples thereof may include 2-hydroxyethyl (meth)acrylate, 2-hydroxypropyl (meth)acrylate, 3-hydroxypropyl (meth)acrylate, 4-hydroxybutyl (meth)acrylate, 2-hydroxy-3-chloropropyl (meth)acrylate, 2-hydroxy-3-phenoxypropyl (meth)acrylate, ethylene glycol (meth)acrylate, polyethylene glycol (meth)acrylate, propylene glycol (meth)acrylate, polypropylene glycol (meth)acrylate, and cyclohexyldimethanol mono(meth)acrylate. Among these, 2-hydroxylethyl (meth)acrylate can be preferably exemplified in terms of polarity control and cost.

As the hydroxyl group-free (meth)acrylate monomer capable of constituting the (meth)acrylate polymer of the component (A), a monofunctional (meth)acrylic acid alkyl ester having a straight or branched alkyl group having 1 to 18 carbon atoms is preferable. Examples thereof may include methyl (meth)acrylate, ethyl (meth)acrylate, propyl (meth)acrylate, isopropyl (meth)acrylate, n-butyl (meth)acrylate, isobutyl (meth)acrylate, pentyl (meth)acrylate, hexyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, lauryl (meth)acrylate, stearyl (meth)acrylate, isostearyl (meth)acrylate, and tridecyl (meth)acrylate.

As a particularly preferrable example of the (meth)acrylate polymer of the component (A), a copolymer of 2-hydroxylethylacrylate and 2-ethylhexylacrylate can be mentioned from the viewpoint of availability, feasibility of the effects of the invention, and the like. An isobornylacrylate may be further copolymerized therewith.

If the content of the (meth)acrylate polymer of the component (A) in the photocurable resin composition is too low, the resulting cured product of the resin composition tends to be brittle. Thus, the content thereof is preferably 1% by mass or more, and more preferably 10% by mass or more. If the content thereof is too high, the resin composition tends to cause ejection failure due to increased viscosity. Thus, the content thereof is preferably 55% by mass or less, and more preferably 45% by mass or less.

<Component (B)>

The photocurable resin composition of the present invention includes a hydroxyl group-containing monofunctional (meth)acrylate monomer, as a polymerization component. The monomer having a hydroxyl group is used because it has a high affinity with the component (A), the (meth)acrylate polymer having a hydroxyl group, and improves reliability of the composition in a high-temperature and high-humidity environment. In this case, a plurality of hydroxyl groups may exist in the monomer molecule, but preferably, one hydroxyl group exists in the monomer molecule.

Specific examples of the hydroxyl group-containing monofunctional (meth)acrylate monomer of the component (B) may include the same monomers as those for the hydroxyl group-containing (meth)acrylate monomer capable of constituting the (meth)acrylate polymer of the component (A). Among these, at least one selected from 4-hydroxybutyl (meth)acrylate, 2-hydroxypropyl (meth)acrylate, and 2-hydroxylethyl (meth)acrylate is preferable.

If the content of the hydroxyl group-containing monofunctional (meth)acrylate monomer of the component (B) in the photocurable resin composition is too low, the resin composition tends to have insufficient reliability in a high-temperature and high-humidity environment. Thus, the content thereof is preferably 1% by mass or more, and more preferably 5% by mass or more. If the content thereof is too high, it breaks down the balance of the polarity of the resin before or after curing and the resulting cured product of the resin composition tends to be opaque. Thus, the content thereof is preferably 30% by mass or less, and more preferably 25% by mass or less.

Note that the content of the hydroxyl group-containing monofunctional (meth)acrylate monomer of the component (B) in the photocurable resin composition is preferably 1 to 3000 parts by mass relative to 100 parts by mass of the (meth)acrylate polymer of the component (A). The monomer contained within this range can effectively maintain the high transparency of the cured product under various environments.

<Component (C)>

The photocurable resin composition of the present invention includes a hydroxyl group-free monofunctional (meth)acrylate monomer as a polymerization component. The hydroxyl group-free monomer is used for setting parameters such as adhesiveness or viscosity of the cured product of the photocurable resin composition composed of the component (A) and the component (B) within respective favorable ranges.

Specific examples of the hydroxyl group-free monofunctional (meth)acrylate monomer of the component (C) may include the same monomers as the hydroxyl group-free (meth)acrylate monomer capable of constituting the (meth)acrylate polymer of the component (A). Among these, at least one selected from isostearyl (meth)acrylate and octyl (meth)acrylate is preferable.

If the content of the hydroxyl group-free monofunctional (meth)acrylate monomer of the component (C) in the photocurable resin composition is too low, the resin composition tends to have a high viscosity. Thus, the content thereof is preferably 30% by mass or more, and more preferably 65% by mass or more. If the content thereof is too high, the resulting cured product of the resin composition tends to be brittle. Thus, the content thereof is preferably 90% by mass or less, and more preferably 75% by mass or less.

Note that the content of the hydroxyl group-free monofunctional (meth)acrylate monomer of the component (C) in the photocurable resin composition is preferably 54 to 9000 parts by mass relative to 100 parts by mass of the (meth)acrylate polymer of the component (A). The monomer contained within this range can effectively maintain high transparency of the cured product under various environments, and allow the resin composition to exhibit high performance as an adhesive.

<Component (D)>

The photocurable resin composition of the present invention includes, as a photopolymerization initiator, not an intramolecular cleavage-type photopolymerization initiator such as a benzoin derivative but a hydrogen abstraction-type photopolymerization initiator. The purpose of this is to bind the compound (A), the (meth)acrylate polymer having a hydroxyl group, to the side chain of the polymer chain.

As the hydrogen abstraction-type photopolymerization initiator of the component (D), a known hydrogen abstraction-type photopolymerization initiator may be used. Examples thereof may include diaryl ketones such as benzophenone and phenylglyoxylates such as methyl benzoylformate. Preferable examples thereof may include methyl benzoylformate in terms of yellowing-free and high hydrogen abstraction ability.

If the content of the hydrogen abstraction-type photopolymerization initiator of the component (D) in the photocurable resin composition is too low, the resulting cured product of the resin composition tends to cause insufficient crosslinking. Thus, the content thereof is preferably 0.1% by mass or more, and more preferably 1% by mass or more. If the content thereof is too high, it tends to cause deterioration in environmental reliability. Thus, the content thereof is preferably 10% by mass or less, and more preferably 5% by mass or less.

<Component E>

The photocurable resin composition of the present invention may contain a polyfunctional (meth)acrylate monomer for improving the reaction rate and maintaining the high-temperature elastic modulus. Specific examples of the polyfunctional (meth)acrylate monomer may include bifunctional or higher functional (meth)acrylates such as 1,6-hexanedioldiacrylate (HDDA), 1,9-nonanedioldiacrylate, 1,10-decanedioldiacrylate, trimethylolpropane triacrylate, pentaerythritol triacrylate, and neopentylglycol hydroxypivalate diacrylate. These may have other functional groups such as a hydroxyl group as long as the effects of the invention are not impaired. Among these, as preferrable specific examples of the polyfunctional (meth) acrylate monomer, at least one selected from trimethylolpropane triacrylate, pentaerythritol triacrylate, and neopentylglycol hydroxypivalate diacrylate may be mentioned.

If the content of the polyfunctional (meth)acrylate monomer of the component (E) in the photocurable resin composition is too low, the resulting cured product of the resin composition tends to have a low crosslinking density. Thus, the content thereof is preferably 0.1% by mass or more, and more preferably 1% by mass or more. If the content thereof is too high, the resulting cured product tends to be brittle. Thus, the content thereof is preferably 5% by mass or less, more preferably 3% by mass or less.

<Other components>

In addition to the components (A) to (D) described above and, as necessary, the component(E), various additives may be blended with the photocurable resin composition of the present invention within a range not impairing the effects of the present invention. For example, a polybutadiene-based plasticizer, a polyisoprene-based plasticizer, a phthalate ester-based plasticizer, an adipate ester-based plasticizer, or the like may be blended as a liquid plasticizer component for reducing the curing shrinkage ratio. Further, a terpenebased resin, a rosin resin, a petroleum resin, or the like may be blended as a tackiness imparting agent (tackifier) for improving tackiness. In addition, 2-mercaptoethanol, lauryl mercaptan, glycidyl mercaptan, mercaptoacetic acid, 2-ethylhexyl thioglycolate, 2,3-dimethylcapto-1-propanol, $\alpha$-methylstyrene dimer, or the like may be blended as a chain transfer agent for adjusting the molecular weight of the cured product. Further, as necessary, the composition may contain common additives such as an adhesion improver such as a silane coupling agent, an antioxidant, and the like.

<Viscosity properties of photocurable resin composition>

The photocurable resin composition of the present invention includes the components described above, and the viscosity thereof is adjusted to 10 mPa·s or more, preferably 15 mPa·s or more at 25°C and 30 mPa·s or less, preferably 20 mPa·s or less at 60°C to realize a good suitability for the inkjet technique under normal inkjet ejection conditions. Dripping from the inkjet nozzle is more likely to occur at a viscosity less than 10 mPa·s at 25°C, while failed ejection is more likely to occur at a viscosity more than 30 mPa·s at 60°C. The viscosity of the photocurable resin composition may be measured with a common viscoelasticity measuring device. As a specific example, a rheometer (Haake RheoStress 600, Thermo Fisher Scientific Inc.; measurement conditions: cone rotor, $\varphi$ = 35 mm, rotor angle: 2°, shear rate: 120 $s^{-1}$) can be used to measure the viscosity.

The viscosity of the photocurable resin composition of the present invention can be controlled by changing, for example, the type and content of each component.

<Preparation of photocurable resin composition>

The photocurable resin composition of the present invention can be prepared by uniformly mixing the components (A) to (D) and other components to be added as necessary via a routine method.

<Method for producing image display device>

Next, a method for producing an image display device of the present invention including the steps (a) to (c) will be described below with reference to the drawings, with each step described in detail. Note that, in the drawings, identical reference numerals represent identical or similar components.

<Step (a) (application step)>

First, as illustrated in FIG. 1, a light-transmitting cover member 1 is prepared. Then, as illustrated in FIG. 2, a photocurable resin composition 2 is ejected from an inkjet nozzle 3 to apply the composition to a surface 1a of the light-transmitting cover member 1, thereby forming a photocurable resin composition layer 4. The application thickness in this case can be set as appropriate depending on the surface condition of the light-transmitting cover member 1 and/or an image display member, desired film physical properties of a photocured resin layer, or the like.

The photocurable resin composition 2 may be applied more than once to obtain a desired thickness.

The light-transmitting cover member 1 may be any material that has a light-transmitting property sufficient to make an image formed on the image display member visible. Examples of the light-transmitting cover member 1 may include a plate-like material and a sheet-like material of such as glass, an acrylic resin, polyethylene terephthalate, polyethylene naphthalate, and polycarbonate. These materials can undergo a single-sided or double-sided hard coat treatment, antireflection treatment, or the like. Physical properties such as thickness or elasticity of the light-transmitting cover member 1 may be determined appropriately depending on the purpose of use.

Examples of the light-transmitting cover member 1 may also include those in which the above-mentioned plate-like material or sheet-like material is combined with a pointing device such as a touch-pad via a known adhesive or a pre-cured resin layer or a cured resin layer formed from the photocurable resin composition of the present invention.

The state of the photocurable resin composition 2 used in this step is liquid under inkjet conditions. Using the composition in liquid form allows for canceling out distortion, even when the surface shape of the light-transmitting cover member 1 or the surface shape of the image display member has the distortion.

<Step (b) (bonding step)>

Next, as illustrated in FIG. 3, an image display member 5 is bonded to the photocurable resin composition layer 4 side of the light-transmitting cover member 1. This bonding can be performed by applying pressure at a temperature of 10°C to 80°C with a known pressure bonding device.

Examples of the image display member 5 may include a liquid crystal display panel, an organic EL display panel, a plasma display panel, and a touch panel. Herein, a touch panel refers to an apparatus in which a display device such as a liquid crystal display panel is combined with a pointing device such as a touch-pad via a known adhesive or a pre-cured resin layer or a cured resin layer formed from the photocurable resin composition of the present invention. When a touch-pad is already integrated into the light-transmitting cover member 1, a touch panel may not be adopted as the image display member 5.

<Step (c) (curing step)>

Next, as illustrated in FIG. 4, the photocurable resin composition layer 4 formed in the step (b) is cured by irradiating the film with ultraviolet rays (UV) from the light-transmitting cover member 1 side, thereby forming a light-transmitting photocured resin layer 6 as illustrated in FIG. 5. In this way, an image display device 100 is obtained. The purpose of curing the photocurable resin composition layer 4 is to convert the photocurable resin composition 2 from a liquid state into a non-flowing state, and furthermore, to impart stickiness to the photocured resin layer 6, and also, to prevent the composition from running down when the film is turned upside down, thereby improving the ease of handling thereof. The degree of such curing is a degree wherein the curing percentage (gel percentage) of the light-transmitting photocured resin layer 6 is preferably 40% or more, and more preferably 60% or more. Herein, a curing percentage (gel percentage) is the numerical value defined as the percentage of an amount of consumed (meth)acryloyl groups in the photocurable resin composition 2 after ultraviolet irradiation relative to an amount of the (meth)acryloyl groups therein before ultraviolet irradiation . The larger this numerical value is, the further the curing has proceeded.

The curing percentage (gel percentage) can be calculated by substituting X and Y into the numerical formula described below, wherein X is the absorption peak height from the baseline at 1640 to 1620 $cm^{-1}$ in the FT-IR chart of the resin composition layer before ultraviolet irradiation; and Y is the absorption peak height from the baseline at 1640 to 1620 $cm^{-1}$ in the FT-IR chart of the resin composition layer after ultraviolet irradiation.

$$\text{Curing percentage (\%)} = \{(X - Y)/X\} \times 100$$

Parameters for ultraviolet irradiation such as the type of light source, output, or a cumulative light quantity are not particularly limited, as long as curing can be achieved such that the curing percentage (gel percentage) is preferably 40% or more. Known conditions for a photo-radical polymerization process of (meth)acrylates by ultraviolet irradiation can be used.
The degree of light transmission of the light-transmitting photocured resin layer 6 may be a degree sufficient to make an image formed on the image display member 5 visible.
Alternatively, instead of completely curing the photocurable resin composition at once, the photocurable resin composition may be pre-cured before bonding, and then completely cured, as described in the following steps (aa) to (dd) :

<Step (aa) (application step)>

First, as illustrated in FIG. 6, a light-transmitting cover member 10 is prepared. Then, as illustrated in FIG. 7, a photocurable resin composition 20 is ejected from an inkjet nozzle 30 to apply the composition to a surface 10a of the light-transmitting cover member 10, thereby forming a photocurable resin composition layer 40. The application thickness in this case can be set as appropriate in accordance with the surface condition of the light-transmitting cover member 10 and an image display member, desired film physical properties of a photocured resin layer, or the like.
The photocurable resin composition 20 may be applied more than once to obtain a desired thickness.

<Step (bb) (pre-curing step)>

Next, as illustrated in FIG. 8, the photocurable resin composition layer 40 formed in the step (aa) is irradiated with ultraviolet rays (UV) to pre-cure the film, thereby forming a pre-cured resin layer 45 as illustrated in FIG. 9. The purpose of pre-curing is to convert the photocurable resin composition 20 from a liquid state into a state where the composition does not significantly flow and to prevent the composition from running down when being turned upside down, thereby improving the ease of handling thereof. The degree of such pre-curing is a degree wherein the curing percentage (gel percentage) of the pre-cured resin layer 45 is preferably 40% or more, and more preferably 60% or more. The curing percentage is preferably less than 100%, although the upper limit thereof may be 100%. More preferably, the curing percentage is less than 95%.

<Step (cc) (bonding step)>

Next, as illustrated in FIG. 10, the pre-cured resin layer 45 side of the light-transmitting cover member 10 is bonded to an image display member 50. This bonding can be performed by applying pressure at a temperature of 10°C to 80°C with a known pressure bonding device.

<Step (dd) (complete-curing step)>

Next, as illustrated in FIG. 11, the pre-cured resin layer 45 sandwiched between the image display member 50 and the light-transmitting cover member 10 was completely cured by irradiating the layer with ultraviolet rays (UV) from the light-transmitting cover member 10 side. In this way, the image display member 50 and the light-transmitting cover member 10 are laminated via a light-transmitting photocured resin layer 60 to obtain an image display device 100 (FIG. 12). This step (dd) may be omitted when the curing percentage of the pre-cured resin layer is 100%. However, for ensuring complete curing, it is preferable to always perform this step.
The purpose of complete-curing the pre-cured resin layer 45 in this step is to cure the same sufficiently and bond and laminate the image display member 50 and the light-transmitting cover member 10. The degree of such complete curing is set at not less than the curing percentage of the pre-cured resin layer 45. Usually, the curing percentage (gel percentage) of the light-transmitting photocured resin layer 60 is set at preferably 95% or more, and more preferably 98% or more.
The degree of light transmission of the light-transmitting photocured resin layer 60 may be a degree sufficient to make an image formed on the image display member 50 visible. It should be noted that the photocurable resin composition was applied to the light-transmitting cover member in the above-mentioned steps (aa) to (dd), but the photocurable resin composition may be applied to the image display member, and then, the light-transmitting cover member may be laminated thereon.

Examples

Hereinafter, the present invention will be described specifically with reference to Examples, but the present invention is not limited to these Examples. Components used in Examples and Comparative Examples are as follows.

(Meta) acrylate polymer

Hitaloid (registered trademark) 7927 (Hitachi Chemical Co., Ltd.); MW 190,000, 170 mgKOH/g
ARUFON (registered trademark) UH-2041 (Toagosei Co., Ltd.); MW 2,500, 120 mgKOH/g
ARUFON (registered trademark) UH-2000 (Toagosei Co., Ltd.); MW 11,000, 20 mgKOH/g
ARUFON (registered trademark) UP-1110 (Toagosei Co., Ltd.); MW 2,500, 0 mgKOH/g

Hydroxyl group-containing monofunctional (meth)acrylate monomer

4-HBA (4-hydroxybutyl acrylate)

Hydroxyl group-free monofunctional (meth)acrylate monomer

ISTA (isostearyl acrylate)
NOA (normaloctyl acrylate)

Polyfunctional (meth)acrylate monomer

TMPTA (trimethylolpropane triacrylate)

Hydrogen abstraction-type photopolymerization initiator

Omnirad (registered trademark) MBF (IGM Resins B.V.), Methyl benzoylformate

Cleavage-type photopolymerization initiator

Speedcure (registered trademark) 84LC (Lambson Japan Co., Ltd.)

Examples 1 to 4 and Comparative Examples 1 to 5

A photocurable resin composition was prepared by uniformly mixing the components shown in Table 1. "Viscosity [mPa·s]" of the obtained photocurable resin composition was measured before photocuring as described below to valuate the performance for inkjet application. "Shear elastic modulus [Pa]", "adhesive strength (cleavage strength) [N/cm$^2$]", and "light transmission [%]" were also measured after photocuring to evaluate the performance as a transparent adhesive.

<Before photocuring>

The viscosities of the photocurable resin composition at 25°C and 60°C were measured by using a rheometer (Haake RheoStress 600, Thermo Fisher Scientific Inc.; measurement conditions: cone rotor, φ = 35 mm, rotor angle: 2°, shear rate: 120 s$^{-1}$). The measurement results are shown in Table 1.

(Evaluation of performance for inkjet application)

When the viscosity of the photocurable resin composition is 10 mPa·s or more at 25°C and 30 mPa·s or less at 60°C, the photocurable resin composition was evaluated to have a good performance for inkjet application. When the viscosity of the photocurable resin composition is less than 10 mPa·s at 25°C or more than 30 mPa·s at 60°C, the photocurable resin composition was evaluated to have a poor performance for inkjet application.

<After photocuring>

"Shear elastic modulus [Pa]", "adhesive strength (cleavage strength) [N/$cm^2$]", and "light transmission [%]" of the photocurable resin composition were measured after photocuring as described below.

(Shear elastic modulus [Pa])

The photocurable resin composition was cured by irradiating the photocurable resin composition with ultraviolet rays at an intensity of 200 mW/$cm^2$ to the extent that the integrated light quantity reaches 2500 mJ/$cm^2$ by using an ultraviolet irradiation device (LC-8, manufactured by Hamamatsu Photonics K.K.). The shear elastic moduli of the obtained cured product were measured at 25°C and 85°C by using a rheometer (Haake MarkII, Thermo Fisher Scientific Inc.; measurement conditions: cone rotor, $\varphi$ = 8 mm, frequency: 1 Hz). The measurement results are shown in Table 1.

(Adhesive strength (cleavage strength) [N/$cm^2$])

Two microscope slides (manufactured by Matsunami Glass Ind., Ltd.) ((W)40 $\times$ (L)70 $\times$ (t)0.4 mm, model number: S1112) were prepared. The photocurable resin composition was applied to the central area 5 mm in diameter on a first microscope slide at an average thickness of 150 $\mu$m to form a photocurable resin composition layer. Then, a second microscope slide was placed on the first microscope slide so as to be orthogonal to each other, thereby sandwiching the photocurable resin composition layer between the two microscope slides. This sandwiched photocurable resin composition layer was cured by irradiating the film with ultraviolet rays at an intensity of 200 mW/$cm^2$ to the extent that the integrated light quantity reaches 2500 mJ/$cm^2$ by using the ultraviolet irradiation device (LC-8, manufactured by Hamamatsu Photonics K.K.), thereby forming a light-transmitting photocured resin layer. In this way, a sample for testing adhesive strength was obtained. The adhesive strength of this sample was measured by using a tensile tester (Autograph AGX-X, manufactured by Shimadzu Corporation; testing speed: 5 mm/min, testing temperature: 85°C) .

(Light transmission [%])

Two microscope slides (manufactured by Matsunami Glass Ind., Ltd.) ((W)40 $\times$ (L)70 $\times$ (t)0.4 mm, model number: S1112) were prepared. The photocurable resin composition was applied to the central area 5 mm in diameter on a first microscope slide at an average thickness of 150 $\mu$m to form a photocurable resin composition layer. Then, a second microscope slide was placed on the first microscope slide, thereby sandwiching the photocurable resin composition layer between the two microscope slides. This sandwiched photocurable resin composition layer was cured by irradiating the film with ultraviolet rays at an intensity of 200 mW/$cm^2$ to the extent that the integrated light quantity reaches 2500 mJ/$cm^2$ by using the ultraviolet irradiation device (LC-8, manufactured by Hamamatsu Photonics K.K.), thereby forming a light-transmitting photocured resin layer. In this way, a sample for testing light transmission was obtained. The light transmission of this sample at 550 nm was measured by using a spectrophotometer (MPS-2450, manufactured by Shimadzu Corporation).

(Determination of performance as transparent adhesive)

When the adhesive strength of the photocurable resin composition after photocuring is 70 N/$cm^2$ or more, the composition was evaluated to have a good performance as a transparent adhesive. When the adhesive strength is less than 70 N/$cm^2$, the composition was evaluated to have a poor performance as a transparent adhesive.

<Determination of applicability as optical adhesive that can be applied by inkjet technique>

When the result was "poor" in any of the "Determination of performance for inkjet application" and "Determination of performance as transparent adhesive", the photocurable resin composition was evaluated to have a poor applicability to the inkjet technique. When the result was "good" in both determinations, the photocurable resin composition was evaluated to have a good applicability to the inkjet technique.

[Table 1]

| | | | Examples | | | | Comparative Examples | | | | |
|---|---|---|---|---|---|---|---|---|---|---|---|
| | | | 1 | 2 | 3 | 4 | 1 | 2 | 3 | 4 | 5 |
| Components Of Photocurable Resin Composition | Hydroxyl Group-Containing (Meth) Acrylate Polymer | Hitaloid 7927 | 5 | 10 | | 20 | 10 | | | 10 | |
| | Hydroxyl Group-Containing (Meth) Acrylate Polymer | ARUFON UH-2041 | | | 10 | 25 | | | | 45 | |
| | Hydroxyl Group-Corrtaining (Meth) Acrylate Polymer | ARUFON UH-2000 | | | | | | 10 | | | |
| | Hydroxyl Group-Free Monofunctional (Meth) Acrylate Monomer | ARUFON UH-1110 | | | | | | | 10 | | |
| | Hydroxyl Group-Containing Monofunctional (Meth) Aaylate Monomer | 4-HBA | 17 | 17 | 17 | 17 | 17 | 17 | 17 | 17 | 17 |
| | Hydroxyl Group-Free Monofimcfional (Meth) Acrylate Monomer | ISTA | 70 | 52 | 52 | | 52 | 52 | 52 | | 75 |
| | Hydroxyl Group-Free Monofunctional (Meth) Acrylate Monomer | NOA | | 15 | 15 | 32 | 15 | 15 | 15 | 20 | |
| | Polyfunctional (Meth) Acrylate monomer | TMPTA | 3 | 1 | 1 | 1 | 1 | 1 | 1 | 3 | 3 |
| | Hydrogen Abstraction-Type Photopolymerization Initiator | Omnirad MBF | 5 | 5 | 5 | 5 | | 5 | 5 | 5 | 5 |
| | Cleavage-Type Photopolymerization Initiator | Speedcure 84 LC | | | | | 5 | | | | |

(continued)

| | | | Examples | | | | Comparative Examples | | | | |
|---|---|---|---|---|---|---|---|---|---|---|---|
| | | | 1 | 2 | 3 | 4 | 1 | 2 | 3 | 4 | 5 |
| Physical Properties Before Curing | Viscosity [mPa·s] | @ 25 °C | 19.5 | 21.9 | 10.5 | 87.0 | 25.5 | 12.3 | 10.1 | 122 | 122 |
| | | @ 60 °C | - | - | - | 29.6 | - | - | - | 33.3 | - |
| | Evaluation Of Performance for Inkjet Application | | Good | Good | Good | Good | Good | Good | Good | Poor | Good |
| Physical Properties After Curing | Shear Elastic Modulus [Pa] | @ 25°C | 6.6E+05 | 1.7E+05 | 1.6E+05 | 1.1E+05 | 7.9E+04 | 1.0E+05 | 1.0E+05 | 1.1E+05 | 9.1E+05 |
| | | @ 85 °C | 2.1E+05 | 1.3E+05 | 9.7E+04 | 1.3E+05 | 6.4E+04 | 5.8E+04 | 5.8E+04 | 1.4E+05 | 1.9E+05 |
| | Adhesive Strength [$N/cm^2$] | @ 85 °C, 150 μmt | 108 | 82 | 72 | 90 | 45 | 64 | 61 | 83 | 56 |
| | Light Transmission [%] | @ 550nm, 150 μmt | >99 | >99 | >99 | >99 | >99 | >99 | >99 | >99 | >99 |
| | Evaluation Of Performance As Transparent Adhesive | | Good | Good | Good | Good | Poor | Poor | Poor | Good | Poor |
| Evaluation Of Applicability As Optical Adhesive That Can Be Applied By Inkjet Technique | | | Good | Good | Good | Good | Poor | Poor | Poor | Poor | Poor |

(Discussion of evaluation results)

The photocurable resin compositions of Examples 1 to 4 include a (meth)acrylate polymer with a hydroxyl value of 120 mgKOH/g or more and having no (meth)acryloyl group; a hydroxyl group-containing monofunctional (meth)acrylate monomer; a hydroxyl group-free monofunctional (meth)acrylate monomer; and a hydrogen abstraction-type photopolymerization initiator; and have a viscosity of 10 mPa·s or more at 25°C and 30 mPa-s or less at 60°C. Therefore, both of the physical properties before curing and the physical properties after curing were at a level adequate for practical applications. The viscosities of the photocurable resin compositions of Examples 1 to 3 are 30 mPa·s or less at 25°C, and it is clear that the viscosities at 60°C thereof will be viscosities lower than that. For this reason, the viscosities at 60°C were not measured. The results indicate that the viscosity at 25°C before curing increases correspondingly with the increasing relative content of the hydroxyl group-containing (meth)acrylate polymer.

On the other hand, in Comparative Example 1, a cleavage-type photopolymerization initiator was used instead of the hydrogen abstraction-type photopolymerization initiator, and thus, the adhesive strength after curing was insufficient. In Comparative Example 2, a (meth)acrylate polymer with a hydroxyl value of 20 mgKOH/g was used, and thus, the adhesive strength after curing was insufficient. In Comparative Example 3, a hydroxyl group-free (meth)acrylate polymer was used, and thus, the adhesive strength after curing was insufficient. In Comparative Example 4, an excessive content of (meth)acrylate polymers made the viscosity before curing excessively high, resulting in a unfavorable performance for inkjet application. In Comparative Example 5, no (meth)acrylate polymer was used, and thus, the adhesive strength after curing was insufficient.

Industrial Applicability

The photocurable resin composition according to the present invention can be applied by an inkjet coating method, and so it is useful in forming a photocured resin layer when producing an image display device composed of an image display members and a light-transmitting cover member that are laminated via a light-transmitting photocured resin layer.

Reference Signs List

1, 10 light-transmitting cover member
1a, 10a surface of light-transmitting cover member
2, 20 photocurable resin composition
3, 30 inkjet nozzle
4, 40 photocurable resin composition layer
45 pre-cured resin layer
5, 50 image display member
6, 60 photocured resin layer
100 image display device

## Claims

**1.** A photocurable resin composition that can be used for an image display device composed of an image display member and a light-transmitting cover member that are laminated via a light-transmitting photocured resin layer formed from the photocurable resin composition, the photocurable resin composition comprising the following components (A) to (D):

<Component (A)>
a (meth)acrylate polymer with a hydroxyl value of 120 mgKOH/g or more and having no (meth)acryloyl group;
<Component (B)>
a hydroxyl group-containing monofunctional (meth)acrylate monomer;
<Component (C)>
a hydroxyl group-free monofunctional (meth)acrylate monomer; and
<Component (D)>

a hydrogen abstraction-type photopolymerization initiator, wherein

the photocurable resin composition has a viscosity of 10 mPa·s or more at 25°C and 30 mPa·s or less at 60°C, determined as described in the specification.

**2.** The photocurable resin composition according to claim 1, wherein

contents of the respective components in the photocurable resin composition are
component (A): 1 to 55% by mass,
component (B): 1 to 30% by mass,
component (C): 30 to 90% by mass, and
component (D): 0.1 to 10% by mass.

**3.** The photocurable resin composition according to claim 1, wherein

contents of the respective components in the photocurable resin composition are
component (A): 10 to 45% by mass,
component (B): 5 to 25% by mass,
component (C): 65 to 75% by mass, and
component (D): 1 to 5% by mass.

**4.** The photocurable resin composition according to any one of claims 1 to 3, wherein the component (B) is contained in an amount of 1 to 3000 parts by mass relative to 100 parts by mass of the component (A).

**5.** The photocurable resin composition according to any one of claims 1 to 4, wherein the (meth)acrylate polymer of the component (A) is a copolymer of 2-hydroxylethylacrylate and 2-ethylhexylacrylate.

**6.** The photocurable resin composition according to any one of claims 1 to 5, wherein the hydroxyl group-containing monofunctional (meth)acrylate monomer of the component (B) is at least one selected from 4-hydroxybutyl (meth)acrylate and 2-hydroxypropyl (meth)acrylate.

**7.** The photocurable resin composition according to any one of claims 1 to 6, wherein the hydroxyl group-free monofunctional (meth)acrylate monomer of the component (C) is at least one selected from isostearyl (meth)acrylate and octyl (meth)acrylate.

**8.** The photocurable resin composition according to any one of claims 1 to 7, wherein the hydrogen abstraction-type photopolymerization initiator of the component (D) is methyl benzoylformate.

**9.** The photocurable resin composition according to any one of claims 1 to 8, further comprising a component (E)
<Component (E)>

a polyfunctional (meth)acrylate monomer
in an amount of 0.1 to 5% by mass.

**10.** The photocurable resin composition according to claim 9, wherein the polyfunctional (meth)acrylate monomer of the component (E) is at least one selected from trimethylolpropane triacrylate and pentaerythritol triacrylate.

**11.** A method for producing an image display device composed of an image display member and a light-transmitting cover member that are laminated via a light-transmitting photocured resin layer formed from a photocurable resin composition, the method comprising the following steps (a) to (c):

<Step (a)>
the step of ejecting the photocurable resin composition according to claim 1 from a nozzle of an inkjet coating device onto a surface of either one of the image display member or the light-transmitting cover member, thereby forming a photocurable resin composition layer;
<Step (b)>
the step of laminating the other member on the photocurable resin composition layer, thereby bonding the image display member and the light-transmitting cover member together; and
<Step (c)>
the step of curing the photocurable resin composition layer sandwiched between both members by irradiating the film with ultraviolet rays, thereby obtaining an image display device composed of the image display member and the light-transmitting cover member that are laminated via a photocured resin layer.

**12.** A method for producing an image display device composed of an image display member and a light-transmitting cover member that are laminated via a light-transmitting photocured resin layer formed from a photocurable resin composition, the method comprising the following steps(aa) to (dd):

<Step (aa)>
the step of ejecting the photocurable resin composition according to claim 1 from a nozzle of an inkjet coating device onto a surface of any one of the image display member and the light-transmitting cover member, thereby forming a photocurable resin composition layer;
<Step (bb)>
the step of irradiating the photocurable resin composition layer with ultraviolet rays, thereby forming a pre-cured resin layer;
<Step (cc)>
the step of laminating the other member on the pre-cured resin layer, thereby bonding the image display member and the light-transmitting cover member together; and
<Step (dd)>
the step of completely curing the pre-cured resin layer sandwiched between both members by irradiating the layer with ultraviolet rays, thereby obtaining an image display device composed of the image display member and the light-transmitting cover member that are laminated via a photocured resin layer.

**Patentansprüche**

**1.** Photohärtbare Harzzusammensetzung, die für eine Bildanzeigevorrichtung verwendet werden kann, die aus einem Bildanzeigeelement und einem lichtdurchlässigen Abdeckelement besteht, die über eine lichtdurchlässige, photogehärtete Harzschicht laminiert sind, die aus der photohärtbaren Harzzusammensetzung gebildet ist, wobei die photohärtbare Harzzusammensetzung die folgenden Komponenten (A) bis (D) umfasst:

<Komponente (A)>
ein (Meth)acrylat-Polymer mit einem Hydroxylwert von 120 mgKOH/g oder mehr und das keine (Meth)acryloylgruppe aufweist;
<Komponente (B)>
ein hydroxylgruppenhaltiges monofunktionelles (Meth)acrylat-Monomer;
<Komponente (C)>
ein hydroxylgruppenfreies monofunktionelles (Meth)acrylat-Monomer; und
<Komponente (D)>

einen Photopolymerisationsinitiator vom Wasserstoffabstraktions-Typ,
wobei
die photohärtbare Harzzusammensetzung eine Viskosität von 10 mPa·s oder mehr bei 25°C und 30 mPa·s oder weniger bei 60°C aufweist, bestimmt wie in der Beschreibung beschrieben.

**2.** Photohärtbare Harzzusammensetzung nach Anspruch 1, wobei

die Gehalte der jeweiligen Komponenten in der photohärtbaren Harzzusammensetzung sind
Komponente (A): 1 bis 55 Massen-%,
Komponente (B): 1 bis 30 Massen-%,
Komponente (C): 30 bis 90 Massen-% und
Komponente (D): 0,1 bis 10 Massen-%.

**3.** Photohärtbare Harzzusammensetzung nach Anspruch 1, wobei die Gehalte der jeweiligen Komponenten in der photohärtbaren Harzzusammensetzung sind

Komponente (A): 10 bis 45 Massen-%,
Komponente (B): 5 bis 25 Massen-%,
Komponente (C): 65 bis 75 Massen-% und

Komponente (D): 1 bis 5 Massen-%.

4. Photohärtbare Harzzusammensetzung nach einem der Ansprüche 1 bis 3, wobei die Komponente (B) in einer Menge von 1 bis 3000 Masseteilen, bezogen auf 100 Masseteile der Komponente (A), enthalten ist.

5. Photohärtbare Harzzusammensetzung nach einem der Ansprüche 1 bis 4, wobei das (Meth)acrylat-Polymer der Komponente (A) ein Copolymer aus 2-Hydroxylethylacrylat und 2-Ethylhexylacrylat ist.

6. Photohärtbare Harzzusammensetzung nach einem der Ansprüche 1 bis 5, wobei das hydroxylgruppenhaltige monofunktionelle (Meth)acrylat-Monomer der Komponente (B) mindestens eines ist, ausgewählt aus 4-Hydroxybutyl(meth)acrylat und 2-Hydroxypropyl(meth)acrylat.

7. Photohärtbare Harzzusammensetzung nach einem der Ansprüche 1 bis 6, wobei das hydroxylgruppenfreie monofunktionelle (Meth)acrylat-Monomer der Komponente (C) mindestens eines ist, ausgewählt aus Isostearyl(meth)acrylat und Octyl(meth)acrylat.

8. Photohärtbare Harzzusammensetzung nach einem der Ansprüche 1 bis 7, wobei der Photopolymerisationsinitiator vom Wasserstoffabstraktions-Typ der Komponente (D) Methylbenzoylformiat ist.

9. Photohärtbare Harzzusammensetzung nach einem der Ansprüche 1 bis 8, ferner umfassend eine Komponente (E)
<Komponente (E)>
ein polyfunktionelles (Meth)acrylat-Monomer in einer Menge von 0,1 bis 5 Massen-%.

10. Photohärtbare Harzzusammensetzung nach Anspruch 9, wobei das polyfunktionelle (Meth)acrylat-Monomer der Komponente (E) mindestens eines ist, ausgewählt aus Trimethylolpropantriacrylat und Pentaerythritoltriacrylat.

11. Verfahren zur Herstellung einer Bildanzeigevorrichtung, die aus einem Bildanzeigeelement und einem lichtdurchlässigen Abdeckelement besteht, die über eine lichtdurchlässige, photogehärtete Harzschicht laminiert sind, die aus einer photohärtbaren Harzzusammensetzung gebildet ist, wobei das Verfahren die folgenden Schritte (a) bis (c) umfasst:

    <Schritt (a)>
    den Schritt des Ausstoßens der photohärtbaren Harzzusammensetzung nach Anspruch 1 aus einer Düse einer Tintenstrahl-Beschichtungsvorrichtung auf eine Oberfläche entweder des Bildanzeigeelements oder des lichtdurchlässigen Abdeckelements, wodurch eine photohärtbare Harzzusammensetzungsschicht gebildet wird;
    <Schritt (b)>
    den Schritt des Laminierens des anderen Elements auf die photohärtbare Harzzusammensetzungsschicht, wodurch das Bildanzeigeelement und das lichtdurchlässige Abdeckelement miteinander verbunden werden; und
    <Schritt (c)>
    den Schritt des Aushärtens der photohärtbaren Harzzusammensetzungschicht, die zwischen den beiden Elementen liegt, durch Bestrahlen des Films mit ultravioletten Strahlen, wodurch eine Bildanzeigevorrichtung erhalten wird, die aus dem Bildanzeigeelement und dem lichtdurchlässigen Abdeckelement besteht, die über eine photogehärtete Harzschicht laminiert sind.

12. Verfahren zur Herstellung einer Bildanzeigevorrichtung, die aus einem Bildanzeigeelement und einem lichtdurchlässigen Abdeckelement besteht, die über eine lichtdurchlässige, photogehärtete Harzschicht laminiert sind, die aus einer photohärtbaren Harzzusammensetzung gebildet ist, wobei das Verfahren die folgenden Schritte (aa) bis (dd) umfasst:

    <Schritt (aa)>
    den Schritt des Ausstoßens der photohärtbaren Harzzusammensetzung nach Anspruch 1 aus einer Düse einer Tintenstrahl-Beschichtungsvorrichtung auf eine Oberfläche von einem von dem Bildanzeigeelement oder dem lichtdurchlässigen Abdeckelement, wodurch eine photohärtbare Harzzusammensetzungsschicht gebildet wird;
    <Schritt (bb)>
    den Schritt des Bestrahlens der photohärtbaren Harzzusammensetzungsschicht mit ultravioletten Strahlen, wodurch eine vorgehärtete Harzschicht gebildet wird;
    <Schritt (cc)>
    den Schritt des Laminierens des anderen Elements auf die vorgehärtete Harzschicht, wodurch das Bildanzeigeelement und das lichtdurchlässige Abdeckelement miteinander verbunden werden; und
<Schritt (dd)>
den Schritt des vollständigen Aushärtens der vorgehärteten Harzschicht, die zwischen den beiden Elementen liegt, durch Bestrahlen der Schicht mit ultravioletten Strahlen, wodurch eine Bildanzeigevorrichtung erhalten wird, die aus dem Bildanzeigeelement und dem lichtdurchlässigen Abdeckelement besteht, die über eine photogehärtete Harzschicht laminiert sind.

**Revendications**

**1.** Composition de résine photodurcissable qui peut être utilisée pour un dispositif d'affichage d'image composé d'un élément d'affichage d'image et d'un élément de recouvrement à transmission lumineuse qui sont stratifiés par le biais d'une couche de résine photodurcie à transmission lumineuse formée à partir de la composition de résine photodurcissable, la composition de résine photodurcissable comprenant les composants suivants (A) à (D) :

<Composant (A)>
un polymère de (méth)acrylate avec une valeur hydroxyle de 120 mgKOH/g ou plus et n'ayant aucun groupe (méth)acryloyle ;
<Composant (B)>
un monomère de (méth)acrylate monofonctionnel contenant un groupe hydroxyle ;
<Composant (C)>
un monomère de (méth)acrylate monofonctionnel exempt de groupe hydroxyle ; et
<Composant (D)>

un initiateur de photopolymérisation de type à abstraction d'hydrogène, dans laquelle
la composition de résine photodurcissable a une viscosité de 10 mPa·s ou plus à 25 °C et 30 mPa·s ou moins à 60 °C, déterminée tel que décrit dans la description.

**2.** Composition de résine photodurcissable selon la revendication 1, dans laquelle

des teneurs en les composants respectifs dans la composition de résine photodurcissable sont
composant (A) : 1 à 55 % en masse,
composant (B) : 1 à 30 % en masse,
composant (C) : 30 à 90 % en masse, et
composant (D) : 0,1 à 10 % en masse.

**3.** Composition de résine photodurcissable selon la revendication 1, dans laquelle

des teneurs en les composants respectifs dans la composition de résine photodurcissable sont
composant (A) : 10 à 45 % en masse,
composant (B) : 5 à 25 % en masse,
composant (C) : 65 à 75 % en masse, et
composant (D) : 1 à 5 % en masse.

**4.** Composition de résine photodurcissable selon l'une quelconque des revendications 1 à 3, dans laquelle le composant (B) est contenu en une quantité de 1 à 3000 parties en masse par rapport à 100 parties en masse du composant (A).

**5.** Composition de résine photodurcissable selon l'une quelconque des revendications 1 à 4, dans laquelle le polymère de (méth)acrylate du composant (A) est un copolymère de 2-hydroxyléthylacrylate et 2-éthylhexylacrylate.

**6.** Composition de résine photodurcissable selon l'une quelconque des revendications 1 à 5, dans laquelle le monomère de (méth)acrylate monofonctionnel contenant un groupe hydroxyle du composant (B) est au moins un sélectionné parmi le (méth)acrylate de 4-hydroxybutyle et le (méth)acrylate de 2-hydroxypropyle.

**7.** Composition de résine photodurcissable selon l'une quelconque des revendications 1 à 6, dans laquelle le monomère de (méth)acrylate monofonctionnel exempt de groupe hydroxyle du composant (C) est au moins un sélectionné parmi le (méth)acrylate d'isostéaryle et le (méth)acrylate d'octyle.

**8.** Composition de résine photodurcissable selon l'une quelconque des revendications 1 à 7, dans laquelle l'initiateur de photopolymérisation de type à abstraction d'hydrogène du composant (D) est le benzoylformate de méthyle.

**9.** Composition de résine photodurcissable selon l'une quelconque des revendications 1 à 8, comprenant en outre un composant (E)
<Composant (E)>

un monomère de (méth)acrylate polyfonctionnel
en une quantité de 0,1 à 5 % en masse.

**10.** Composition de résine photodurcissable selon la revendication 9, dans laquelle le monomère de (méth)acrylate polyfonctionnel du composant (E) est au moins un sélectionné parmi le triacrylate de triméthylolpropane et le triacrylate de pentaérythritol.

**11.** Procédé de production d'un dispositif d'affichage d'image composé d'un élément d'affichage d'image et d'un élément de recouvrement à transmission lumineuse qui sont stratifiés par le biais d'une couche de résine photodurcie à transmission lumineuse formée à partir d'une composition de résine photodurcissable, le procédé comprenant les étapes suivantes (a) à (c) :

<Étape (a)>
l'étape d'éjection de la composition de résine photodurcissable selon la revendication 1 d'une buse d'un dispositif d'enrobage à jet d'encre sur une surface de l'un ou l'autre de l'élément d'affichage d'image ou de l'élément de recouvrement à transmission lumineuse, formant de ce fait une couche de composition de résine photodurcissable ;
<Étape (b)>
l'étape de stratification de l'autre élément sur la couche de composition de résine photodurcissable, assemblant de ce fait l'élément d'affichage d'image et l'élément de recouvrement à transmission lumineuse ensemble ; et
<Étape (c)>
l'étape de durcissement de la couche de composition de résine photodurcissable prise en sandwich entre les deux éléments en irradiant le film avec des rayons ultraviolets, obtenant de ce fait un dispositif d'affichage d'image composé de l'élément d'affichage d'image et de l'élément de recouvrement à transmission lumineuse qui sont stratifiés par le biais d'une couche de résine photodurcie.

**12.** Procédé de production d'un dispositif d'affichage d'image composé d'un élément d'affichage d'image et d'un élément de recouvrement à transmission lumineuse qui sont stratifiés par le biais d'une couche de résine photodurcie à transmission lumineuse formée à partir d'une composition de résine photodurcissable, le procédé comprenant les étapes suivantes (aa) à (dd) :

<Étape (aa)>
l'étape d'éjection de la composition de résine photodurcissable selon la revendication 1 d'une buse d'un dispositif d'enrobage à jet d'encre sur une surface de l'un quelconque de l'élément d'affichage d'image et de l'élément de recouvrement à transmission lumineuse, formant de ce fait une couche de composition de résine photodurcissable ;
<Étape (bb)>
l'étape d'irradiation de la couche de composition de résine photodurcissable avec des rayons ultraviolets, formant de ce fait une couche de résine pré-durcie ;
<Étape (cc)>
l'étape de stratification de l'autre élément sur la couche de résine pré-durcie, assemblant de ce fait l'élément d'affichage d'image et l'élément de recouvrement à transmission lumineuse ensemble ; et
<Étape (dd)>
l'étape de durcissement complet de la couche de résine pré-durcie prise en sandwich entre les deux éléments en irradiant la couche avec des rayons ultraviolets, obtenant de ce fait un dispositif d'affichage d'image composé de l'élément d'affichage d'image et de l'élément de recouvrement à transmission lumineuse qui sont stratifiés par le biais d'une couche de résine photodurcie.

FIG. 1

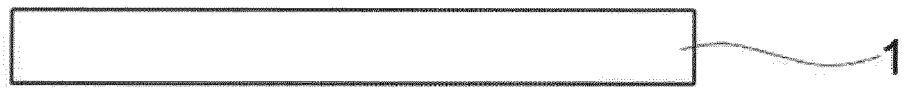


FIG. 2

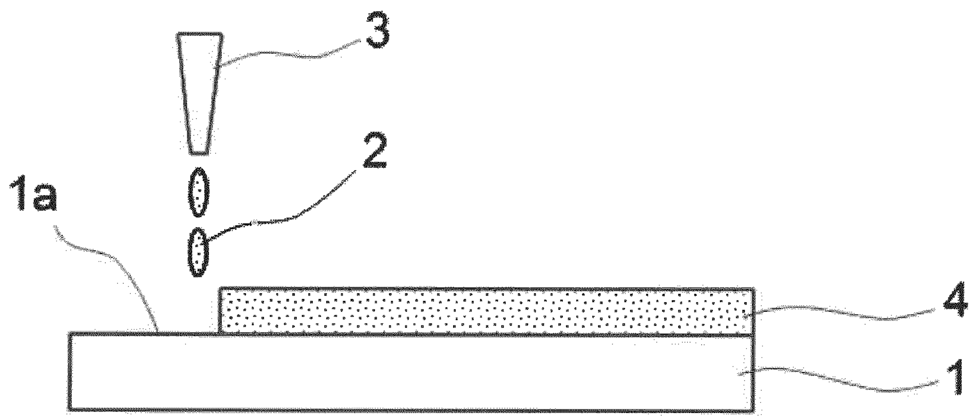


FIG. 3

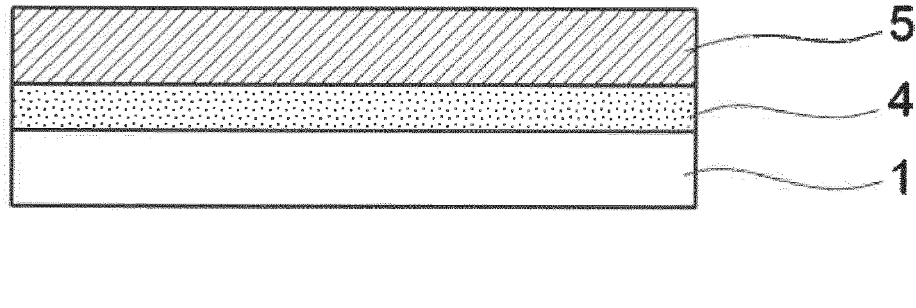

FIG. 4

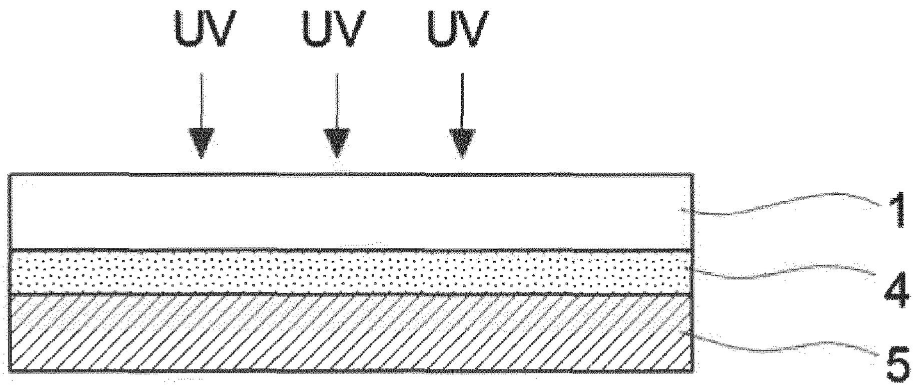


FIG. 5

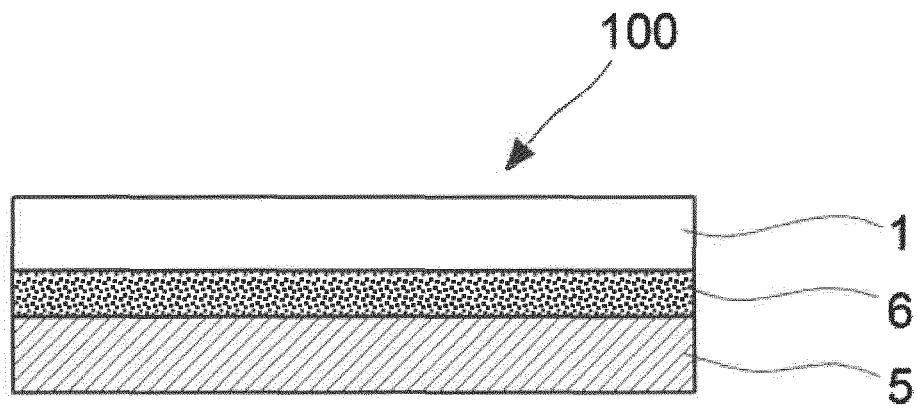


FIG. 6

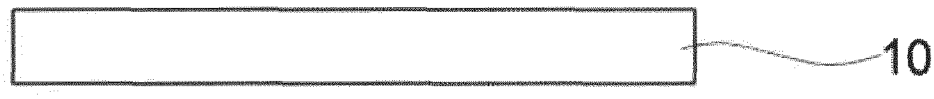

FIG. 7

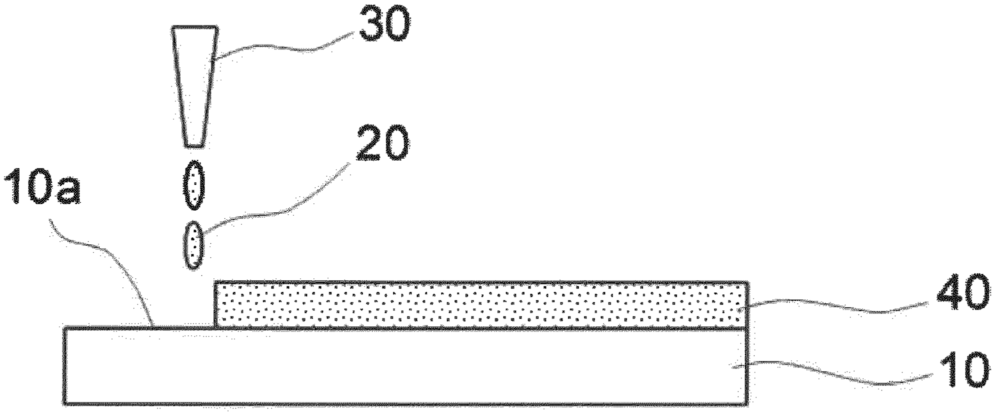


FIG. 8

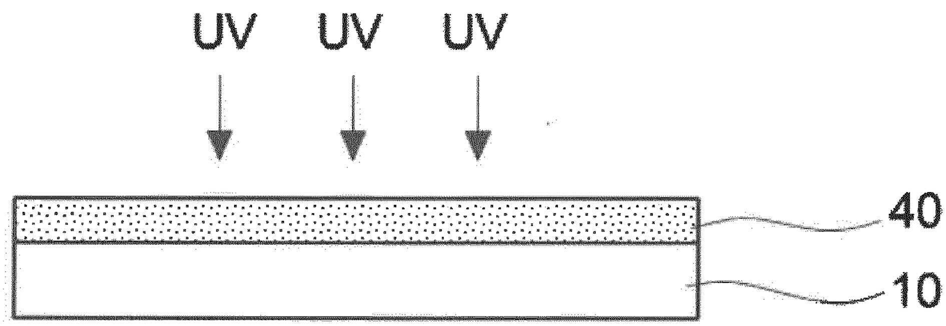


FIG. 9

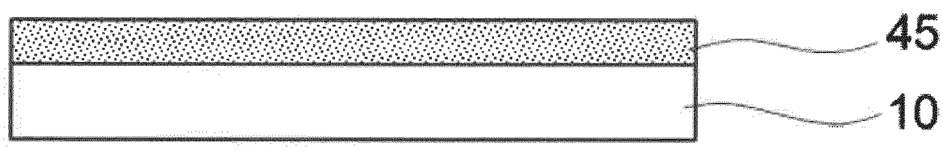

FIG. 10

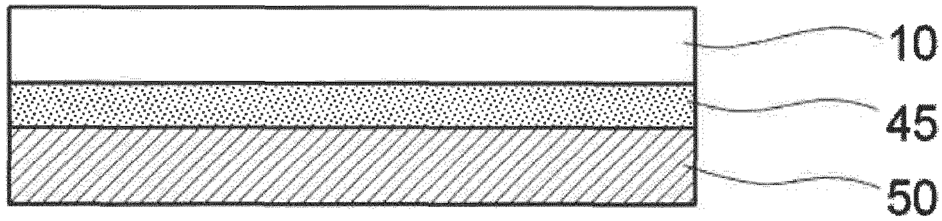


FIG. 11

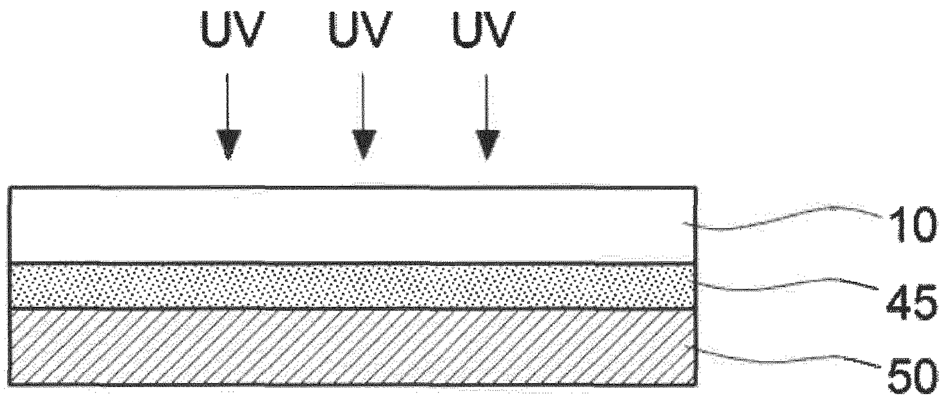


FIG. 12

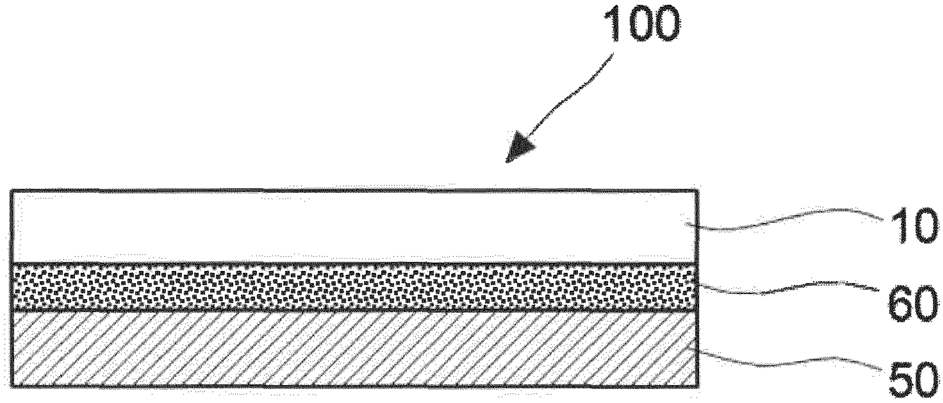

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017210578 A